(19) **Europäisches Patentamt**

**European Patent Office**

**Office européen des brevets**

(11) **EP 0 129 368 B2**

(12) **NEW EUROPEAN PATENT SPECIFICATION**

(45) Date of publication and mention
of the opposition decision:
**03.04.2002   Bulletin 2002/14**

(51) Int Cl.$^7$: **C08F 10/00**, C08F 4/62

(45) Mention of the grant of the patent:
**26.07.1989   Bulletin 1989/30**

(21) Application number: **84303805.0**

(22) Date of filing: **05.06.1984**

(54) **Process and catalyst for polyolefin density and molecular weight control**

Verfahren und Katalysator um die Dichte und das molekulare Gewicht von Polyolefinen zu kontrollieren

Procédé et catalyseur pour contrôler la densité et le poids moléculaire de polyoléfines

(84) Designated Contracting States:
**BE DE FR GB IT NL SE**

(30) Priority: **06.06.1983   US 501688**

(43) Date of publication of application:
**27.12.1984   Bulletin 1984/52**

(73) Proprietor: **ExxonMobil Research and Engineering Company
Annandale, New Jersey 08801 (US)**

(72) Inventors:
• **Ewen, John Alexander
Houston Texas (US)**
• **Welborn, Howard Curtis Jr.
Houston Texas (US)**

(74) Representative: **UEXKÜLL & STOLBERG
Patentanwälte
Beselerstrasse 4
22607 Hamburg (DE)**

(56) References cited:
EP-A- 0 035 242          EP-A- 0 069 951
DE-A- 2 608 863          DE-A- 2 608 933
DE-A- 3 127 133          FR-A- 2 072 484
US-A- 2 924 593          US-A- 3 161 629

• DIE MAKROMOLEKULARE CHEMIE, vol. 182, no. 4, April 16, 1981 HEIDELBERG (DE) J. CIHLÁR et al.: "Polymerization of Ethylene Catalyzed by Titanocene Systems, 2a, Catalytic Systems CP2 TiRCI/Oxyaluminium Compounds", pages 1127-113 4
• Comprehensive Organometallic Chemistry, 8, page 1058 (Pergamon Press; Sir G. Wilkinson, Editor)
• Journal of Polymer Science, 55, pages 145-152 (1961)
• Die Makromolekulare Chemie, 148, 107-118 (1971).
• Polymer Bulletin 9, 1983, pp. 464-469
• Herwig, Jens, Dissertation Fachbereich Chemie der Universität Hamburg, 1979
• Marconi, W. et al, la chimica e l'industria, vol. 44, nr. 3, March 1962
• Külper, Klaus, Diplomarbeit Fachbereich Chemie Universität Hamburg, 1981
• Makromol.Chem. Rapid Comm. Vol. 4, 1983, pp. 417-421
• Proc. IUPAC Makromol. Symp. 28th, p. 247
• R.B: Seymour et al. "Advances in Polyolefins", 1987, pp.361-371

Remarks:
The file contains technical information submitted after the application was filed and not included in this specification

**Description**

This invention relates to catalyst suitable for the polymerisation of an olefin.

The catalyst can be used in an improved process for polymerising olefins and more particularly in a method of controlling the molecular weight and/or the density of polyolefins produced so as to obtain polymer product in any desired range of molecular weight and densities. The invention particularly relates to the polymerisation of ethylene in the presence or absence of comonomers to polyethylenes of controlled molecular weight and density.

In US Patent 3,051,690 of Vandenberg, there is described a process of polymerising olefins to high molecular weight polyolefins of controlled molecular weight, as indicated by polymer viscosity, by the addition of controlled amounts of hydrogen to the polymerisation system. The molecular weight control was described as useful in combination with a hydrocarbon insoluble catalyst system comprising the reaction product of a compound of a metal of Group IVB, VB, VIB, and VIII with an organometallic compound of an alkali metal, alkaline earth metal, zinc, earth metal or rare earth metal. The patent teaches that increased use of hydrogen during the polymerisation process results in the decrease of polymer product viscosity.

It is further known that certain metallocenes such as bis(cyclopentadienyl) titanium or zirconium dialkyls in combination with aluminium alkyl/water cocatalyst form homogeneous catalyst systems for the polymerisation of ethylene.

German Patent Application 2,608,863 discloses the use of a catalyst system for the polymerization of ethylene consisting of bis (cyclopentadienyl) titanium dialkyl, aluminum trialkyl and water.

German Patent Application 2,608,933 discloses an ethylene polymerization catalyst system consisting of zirconium metallocenes of the general formula $(cyclopentadienyl)_nZrY_{4-n}$, wherein n stands for a number in the range of 1 to 4, Y for R, $CH_2AlR_2$, $CH_2CH_2AlR_2$ and $CH_2CH(AlR_2)_2$, wherein R stands for alkyl or metallo alkyl, an aluminum trialkyl cocatalyst and water.

European Patent Appln. No. 0035242 discloses a process for preparing ethylene and atactic propylene polymers in the presence of a halogen-free Ziegler catalyst system of (1) cyclopentadienyl compound of the formula $(cyclopentadienyl)_nMeY_{4-n}$ in which n is an integer from 1 to 4, Me is a transition metal, especially zirconium, and Y is either hydrogen, a $C_1$—$C_5$ alkyl or metallo alkyl group or a radical having the following general formula $CH_2AlR_2$, $CH_2CH_2AlR_2$ and $CH_2CH(AlR_2)_2$ in which R represents a $C_1$—$C_5$ alkyl or metallo alkyl group, and (2) an alumoxane.

The above patents disclose that the polymerization process employing the homogeneous catalyst system is also hydrogen sensitive for molecular weight control.

An advantage of the cyclopentadienyl-metallalumoxane catalyst system, is their extremely high activity for ethylene polymerization. Another significant advantage is that unlike olefin polymers produced in the presence of conventional heterogeneous Ziegler catalyst, terminal unsaturation is present in polymers produced in the presence of these homogeneous catalysts. The use of hydrogen for molecular weight control for these homogeneous catalysts would be disadvantageous since the terminal unsaturation would become saturated and hence, the loss of available sites for building functionalities into the olefin polymers.

In EP 35242, the patentee discloses that relatively low molecular weight polymer products are obtained at higher polymerization temperatures and relatively high molecular weight polymers at low polymerization temperatures.

As is generally known in the art, it is desirable to maximize polymerization temperatures in order to achieve high polymerization activity and reduce operating costs in terms of energy recovery. The catalyst disclosed in EP 35242 has certain disadvantages for the production of high molecular weight, high density resins since to produce such polymer products, one must operate at low temperatures thereby increasing operating costs and decreasing catalytic activity.

It would be highly desirable to provide homogeneous catalysts which can be usefully employed to produce high molecular weight polymer products at conventional polymerization temperatures and to be able to control molecular weight and density of the polymer product without resorting to temperature control or hydrogen.

Accordingly, the present invention provides new cyclopentadienyl - metal/alumoxane catalysts for olefin polymerization which catalyst can be usefully employed at high temperatures to obtain olefin polymer products having excellent properties with respect to molecular weight, density and terminal unsaturation.

It has been discovered that the molecular weight of polymer product can be controlled by the judicious selection of the substituent on the cyclopentadienyl ring and use of ligands for the metallocenes. It has further been discovered that comonomer content can be controlled by the judicious selection of metallocenes. Hence, by the selection of catalyst components one can tailor polymer product with respect to molecular weight and density.

The catalysts usefully employed for the polymerization of ethylene and alpha-olefins to polyethylene homopolyolefins and copolyethylene- alpha-olefin comprise

(a) a compound of the formula

$$(C_5R'_m)_pR''_s(C_5R'_m)MeQ_{3-p} \text{ or } R''_s(C_5R'_m)_2MeQ',$$

wherein Me is zirconium, $(C_5R'_m)$ is cyclopentadienyl or substituted cyclopentadienyl, each R' which can be the same or different, is hydrogen, an alkyl, alkenyl, aryl, alkylaryl or arylalkyl radical having from 1 to 20 carbon atoms or two R' substituents together form a fused $C_4$-$C_6$ ring, R'' is a $C_1$-$C_4$ alkylene radical or a dialkyl silicon radical bridging two $(C_5R'_m)$ rings, each Q which can be the same or different, is aryl, alkyl, alkenyl, alkylaryl or arylalkyl radical having from 1 to 20 carbon atoms or halogen, Q' is an alkylidene radical having from 1 to 20 carbon atoms, s is 0 or 1, p is 1; m is 4 when s is 1; and m is 5 and $(C_5R'_m)$ is mono-alkyl, di-alkyl, tri-alkyl, or tetra-alkyl substitued cyclopentadienyl when s is 0; and (b) an alumoxane.

The molecular weight of the polymer product can be further controlled by the ratio of alumoxane to metallocene.

The present invention also provides a process for producing polyethylenes having molecular weight at relatively high temperatures. The process comprises polymerizing ethylene alone or in the presence of minor amounts of higher alpha-olefins or diolefins in the presence of the catalyst system described above.

The advantages of this invention are obtained by the use of derivatives of the cyclopentadienyl ring and/or other ligands for the metallocenes in order to control and tailor polymer molecular weight and/or comonomer content.

The present invention is directed towards catalyst systems and a catalytic process for the polymerization of olefins, and particularly ethylene to high molecular weight polyethylenes such as linear low density polyethylene (LLDPE) and high density polyethylene (HDPE). The polymers are intended for fabrication into articles by extrusion, injection molding, thermoforming, rotational molding, and the like. In particular, the polymers of this invention are homopolymers of ethylene, and copolymers of ethylene with higher alpha-olefins having from 3 to 10 carbon atoms and preferably 4 to 8 carbon atoms per molecule. Illustrative of the higher alpha-olefins are butene-1, hexene-1 and octene-1.

In the process of the present invention, ethylene, either alone or together with alpha-olefins having 3 or more carbon atoms per molecule, is polymerized in the presence of a catalyst system comprising at least one metallocene as hereinbefore defined and an alumoxane.

In accordance with this invention, one can also produce olefin copolymers particularly copolymers of ethylene and higher alpha-olefins having from 3—8 carbon atoms per molecule. As indicated above, the comonomer content can be controlled through the selection of metallocene catalyst component.

The alumoxanes are polymeric aluminum compounds which can be represented by the general formulae $(R—Al—O)_n$ which is a cyclic compound and $R(R—Al—O—)_nAlR_2$, which is a linear compound. In the general formula R is a $C_1$—$C_5$ alkyl group such as, for example, methyl, ethyl, propyl, butyl and pentyl and n is an integer from 1 to 20. Most preferably, R is methyl. Generally, in the preparation of alumoxanes from, for example, aluminum trimethyl and water, a mixture of the linear and cyclic compounds is obtained.

The alumoxanes can be prepared in various ways. Preferably, they are prepared by contacting water with a solution of aluminum trialkyl, such as, for example, aluminum trimethyl, in a suitable organic solvent such as benzene or an aliphatic hydrocarbon. For example, the aluminum alkyl is treated with water in the form of a moist solvent. In an alternative method, the aluminum alkyl such as aluminum trimethyl can be desirably contacted with a hydrated salt such as hydrated copper sulfate.

Preferably, the alumoxane is prepared in the presence of a hydrated copper sulfate. The method comprises treating a dilute solution of aluminum trimethyl in, for example, toluene, with copper sulfate represented by the general formula $CuSO_4 \cdot 5H_2O$. The ratio of copper sulfate to aluminum trimethyl is desirably about 1 mole of copper sulfate for 4 to 5 moles of aluminum trimethyl. The reaction is evidenced by the evolution of methane.

The new metallocene compounds usefully employed in accordance with this invention are the substituted di-cyclopentadienyl zirconium compounds. The metallocenes are represented by the general formula

$$(C_5R'_m)_pR''_s(C_5R'_mMeQ_{3-p'} \ R''_s(C_5R'_m)_2MeQ'$$

as specified above.

Exemplary hydrocarbyl radicals are methyl, ethyl, propyl, butyl, amyl, isoamyl, hexo, isobutyl, heptyl, octyl, nonyl, dicyl, cetyl, 2-ethylhexyl and phenyl.

Exemplary alkylene radicals are methylene, ethylene and propylene.

Exemplary halogen atoms include chlorine, bromine and iodine and of these halogen atoms, chlorine is preferred.

Exemplary of the alkylidene radicals is methylidene, ethylidene and propylidene.

Illustrative but non-limiting examples of the zirconocenes which can be usefully employed in accordance with this invention are the alkyl substituted cyclopentadienes, such as bis(ethyl cyclopentadienyl)zirconium dimethyl, bis (methylcyclopentadienyl)zirconium dimethyl, and dihalide complexes of the above; di-alkyl, tri-alkyl, and tetra-alkyl cyclopentadienes, such as bis(tetramethylcyclopentadienyl)zirconium dimethyl, bis(1,2 - dimethylcyclopentadienyl)zirconium dimethyl, bis(1,3 - diethylcyclopentadienyl)zirconium dimethyl and dihalide complexes of the above; dialkyl silicon and $C_1$-$C_4$ alkylene bridged cyclopentadiene complexes such as dimethylsilyldicyclopentadienyl zirconium dimethyl or dihalide and methylene dicyclopentadienyl zirconium dimethyl or dihalide.

The ratio of aluminum in the alumoxane to total metal in the metallocene can be in the range of 0.5:1 to 10,000:1, and preferably 5:1 to 1000:1.

The solvents used in the preparation of the catalyst system are inert hydrocarbons, in particular a hydrocarbon that is inert with respect to the catalyst system. Such solvents are well known and include, for example, isobutane, butane, pentane, hexane, heptane, octane, cyclohexane, methylcyclohexane, toluene and xylene.

As a further control and refinement of polymer molecular weight, one can vary the concentration alumoxane. Higher concentrations of alumoxane in the catalyst system results in higher polymer product molecular weight.

Since, in accordance with this invention, one can produce high viscosity polymer product at relatively high temperature, temperature does not constitute a limiting parameter as with the prior art metallocene/ alumoxane catalyst. The catalyst systems described herein, therefore, are suitable for the polymerization of olefins in solution, slurry or gas phase polymerizations and over a wide range of temperatures and pressures. For example, such temperatures may be in the range of -60°C to 280°C and especially in the range of 50°C to 160°C. The pressures employed in the process of the present invention are those well known for, for example, in the range of about 1 to about 500 atmospheres (99.3 to 49644 kPa) and greater.

In a solution phase polymerization the alumoxane is preferably dissolved in a suitable solvent, typically in inert hydrocarbon solvent such as toluene and xylene in molar ratios of about $5\times10^{-3}$M. However greater or lesser amounts can be used.

The soluble metallocenes can be converted to supported heterogeneous catalysts by depositing said metallocenes on typical catalyst supports such as, for example, silica, alumina, and polyethylene. The solid catalysts in combination with an alumoxane can be usefully employed in slurry and gas phase olefin polymerizations.

After polymerization and deactivation of the catalyst, the product polymer can be recovered by processes well known in the art for removal of deactivated catalysts and solution. The solvents may be flashed off from the polymer solution and the polymer obtained extruded into water and cut into pellets or other suitable comminuted shapes. Pigments, antioxidants and other additives, as is known in the art, may be added to the polymer.

The polymer product obtained in accordance with this invention will have a weight average molecular weight in the range of 1,400,000 to 500 and preferably 500,000 to 1000.

The polydispersities (molecular weight distribution) expressed as $\overline{M}w/\overline{M}n$ are typically from 1.5 to 4.0. The polymers contain 1.0 chain end insaturation per molecule. Broadened MW can be obtained by employing two or more of the metal cyclopentadienyls in combination with the alumoxane as described in cofiled application entitled Process and Catalyst for Producing Polyethylene having a Broad Molecular Weight Distribution (EP—A—128 045).

The polymers produced by the process of this present invention are capable of being fabricated into a wide variety of articles, as is known for homopolymers of ethylene and copolymers of ethylene and higher alpha-olefins. The present invention is illustrated by the following examples.

Examples

In the examples following the molecular weights were determined on a Water's Associates Model No. 150C GPC (Gel Permeation Chromatography). The measurements were made by dissolving polymer samples in hot trichlorobenzene (TCB) and filtered. The GPC runs were performed at 145°C in TCB at 1.5 ml/min using two Shodex A80 MIS Gel columns of 9.4 mm internal diameter from Perkin Elmer Inc. 300 milliliter of 3.1 percent solutions in TCB were injected and the chromotagraphic runs monitored at sensitivity equal -64 and scale factor equal 65. The samples were run in duplicate. The integration parameters were obtained with a Water's Associates data module. An antioxidant, N - phenyl - 2-naphthylamine, was added to all samples.

In the examples following the alumoxane was prepared in the following manner:

600 cm³ of a 14.5% solution of triamethylaluminum (TMA) in heptane was added in 30 cm³ increments at 5 minute intervals, with rapid stirring, to 200 cm³ toluene in a Zipperclave reactor under nitrogen and maintained at 100°C. Each increment was immediately followed by the addition of 0.3 cm³ water. The reactor was vented of methane after each addition. Upon completion of the addition, the reactor was stirred for 6 hours while maintaining the temperature at 100°C. The mixture, containing soluble alumoxane and a small quanity of insoluble alumina, is allowed to cool to room temperature and settle. The clear solution containing the soluble alumoxane is separated by decontation from the solids.

The molecular weights were determined by gel permeation chromatography at 145°C on a Waters GPC 150C.

Example 1 (comparative)

A 1-liter stainless steel pressure vessel, equipped with an incline blade stirrer, an external water jacket for temperature control, a septum inlet and vent line, and a regulated supply of dry ethylene and nitrogen, was dried and deoxygenated with a nitrogen flow. 500 $cm^3$ of dry, degassed toluene was introduced directly into the pressure vessel. 10.0 $cm^3$ of 0.785 molar (in total aluminum) alumoxane was injected into the vessel by a gas tight syringe through the septum inlet and the mixture was stirred at 1,200 rpms and 80°C for 5 minutes at 0 psig (99.3 kPa) of nitrogen. 0.091 mg bis(cyclopentadienyl) zirconium dichloride dissolved in 2.0 ml of dry, distilled toluene was injected through the septum inlet into the vessel. After 1 minute, ethylene at 60 psig (515 kPa) was admitted and while the reaction vessel was maintained at 80°C. The ethylene was passed into the vessel for 30 minutes at which time the reaction was stopped by rapidly venting and cooling. 13.6 g of powdery white polyethylene having a $\overline{M}n$ of 39,500 and a $\overline{M}w$ of 140,000 with a molecular weight distribution of 3.5.

Example 2

A 1-liter stainless steel pressure vessel, equipped with an incline blade stirrer, an external water jacket for temperature control, a septum inlet and vent line, and a regulated supply of dry ethylene and nitrogen, was dried and deoxygenated with a nitrogen flow. 400 $cm^3$ of dry, degassed toluene was introduced directly into the pressure vessel. 20.0 $cm^3$ of alumoxane (.785 mmoles in total aluminum) was injected into the vessel by a gas tight syringe through the septum inlet and the mixture was stirred at 1,200 rpms and 80°C for 5 minutes at 0 psig (99.3 kPa) of nitrogen. 0.2101 mg bis(methylcyclopentadienyl) zirconium dichloride dissolved in 2.0 ml of dry, distilled toluene was injected through the septum inlet into the vessel to give an Al/Zr ratio of $24 \times 10^3$. After 1 minute, ethylene at 60 psig was admitted for 30 minutes while maintaining the reaction vessel at 80°C. The reaction was stopped by rapidly venting and cooling. 28.6 g of powdery white polyethylene having a $\overline{M}n$ of 55,900 and a $\overline{M}w$ of 212,000 with a molecular weight distribution of 3.8 and activity (kg/g.h.atm) of 467.

Example 3

Examples 3 was performed as Example 2 except that the metallocenes listed in Table I were substituted for the metallocene in Example 2. The results of the examples are summarized in Table I.

Examples 4 and 5

Examples 4 and 5 were performed as Example 2 except that 0.2 mg of metallocenes as listed in Table II and 9.0 $cm^3$ alumoxane were employed giving an Al/Zr of $8 \times 10^3$. The results are summarized in Table II.

TABLE I

| Substituted cyclopentadiene (Cp) ligand effects | | | | | |
|---|---|---|---|---|---|
| Example | Catalyst[a.] | $\overline{M}w$ | $\overline{M}n$ | MWD | Activity kg/g.h.atm |
| 1 | $Cp_2ZrCl_2$ | 140,000 | 39,500 | 3.5 | 252 |
| 2 | $(MeCp)_2ZrCl_2$ | 212,000 | 55,900 | 3.8 | 467 |
| 3 | $(EtCp)_2ZrCl_2$ | 171,000 | 44,700 | 3.8 | 306 |

[a.]Al/Zr=24,000

TABLE II

| Example | Catalyst[a.] | $\overline{M}w$ | $\overline{M}n$ | MWD | Activity kg/g.h.atm |
|---|---|---|---|---|---|
| 4 | $(MeCp)_2ZrCl_2$ | 180,000 | 48,300 | 3.7 | 278 |
| 5 | $(EtCp)_2ZrCl_2$ | 184,000 | 50,000 | 3.7 | 281 |

[a.] Al/Zr = 8,000

The physical properties of a polyethylene are largely determined by the polymer molecular weight and the polymer density. The previous examples have demonstrated that through the ligand effect, one can control the molecular weight of polyethylenes. The following examples demonstrate that through the same ligand effects, one can control the polymer density in copolymers such as ethylene copolymers. In addition, the control of polymer density in the following examples is demonstrated at fixed reaction conditions indicating that density control is mediated by ligand effects on the catalyst reactivity ratios.

Example 6 (comparative)

A 1-liter stainless steel pressure vessel, equipped with an incline blade stirrer, an external water jacket for temperature control, a septum inlet and vent line, and a regulated supply of dry ethylene and nitrogen, was dried and deoxygenated with a nitrogen flow. 400 $cm^3$ of dry, degassed toluene was introduced directly into the pressure vessel. 10.0 $cm^3$ of alumoxane solution (0.8 moles in total aluminum) was injected into the vessel by a gas tight syringe through the septum inlet and the mixture was stirred at 1,200 rpms and 50°C for 5 minutes at 0 psig (99.3 kPa) of nitrogen. 200 $cm^3$ of liquid propylene at 25°C was then added resulting in a pressure of 126.2 psig. (969.4 kPa) 0.113 mg of bis (cyclopentadienyl)zirconium dimethyl in 10 ml of toluene was injected through the septum inlet into the vessel. Ethylene at 152.1 psig (1148 kPa) was admitted and the reaction vessel was maintained at 50°C. The ethylene was passed into the vessel for 30 minutes at which time the reaction was stopped by rapidly venting and cooling the reactor. 66.0 g of copolymer having an intrinsic viscosity of 0.74 was isolated which contained 31 mole % propylene. The density was 0.854 $g/cm^3$ at 23°C.

Example 7

A 1-liter stainless steel pressure vessel, equipped with an incline blade stirrer, an external water jacket for temperature control, a septum inlet and vent line, and a regulated supply of dry ethylene and nitrogen, was dried and deoxygenated with a nitrogen flow. 400 $cm^3$ of dry, degassed toluene was introduced directly into the pressure vessel. 10.0 $cm^3$ of alumoxane solution (0.8 moles in total aluminum) was injected into the vessel by a gas tight syringe through the septum inlet and the mixture was stirred at 1,200 rpms and 50°C for 5 minutes at 0 psig of nitrogen. 200 $cm^3$ of liquid propylene at 25°C was then added resulting in a pressure of 126.2 psig. (969.4 kPa) 0.102 mg of dimethylsilyl - cyclopentadienyl zirconium chloride in 10 ml of toluene was injected through the septum inlet into the vessel. Ethylene at 152.4 psig (1150 kPa) was admitted and the reaction vessel was maintained at 50°C. The ethylene was passed into the vessel for 30 minutes at which time the reaction was stopped by rapidly venting and cooling the reactor. 12.0 gms of copolymer having an intrinsic viscosity of 0.52 was isolated which contained 43 mole % propylene. The density was 0.854 $g/cm^3$ at 23°C.

**Claims**

1. A catalyst suitable for the polymerisation of an olefin comprising (a) a compound of the formula

$$(C_5R'_m)_pR''_s(C_5R'_m)MeQ_{3-p} \text{ or } R''_s(C_5R'_m)_2MeQ',$$

   wherein Me is zirconium, $(C_5R'_m)$ is cyclopentadienyl or substituted cyclopentadienyl, each R' which can be the same or different, is hydrogen, an alkyl, alkenyl, aryl, alkylaryl or arylalkyl radical having from 1 to 20 carbon atoms or two R' substituents together form a fused $C_4$-$C_6$ ring, R'' is a $C_1$-$C_4$ alkylene radical or a dialkyl silicon radical bridging two $(C_5R'_m)$ rings, each Q which can be the same or different, is aryl, alkyl, alkenyl, alkylaryl or arylalkyl radical having from 1 to 20 carbon atoms or halogen, Q' is an alkylidene radical having from 1 to 20 carbon atoms, s is 0 or 1, p is 1; m is 4 when s is 1; and m is 5 and $(C_5R'_m)$ is mono-alkyl, di-alkyl, tri-alkyl, or tetra-alkyl substitued cyclopentadienyl when s is 0; and (b) an alumoxane.

2. A process for polymerising one or more olefins which comprises conducting the polymerisation in the presence of a catalyst system as claimed in claim 1.

3. A process according to claim 2 wherein the olefin is ethylene or an $\alpha$-olefin having from 3 to 8 carbon atoms per molecule.

**Patentansprüche**

1. Katalysator, geeignet für die Polymerisation eines Olefins, enthaltend (a) eine Verbindung der Formel

$$(C_5R'_m)_pR''_s(C_5R'_m)MeQ_{3-p} \text{ oder } R''_s(C_5R'_m)_2MeQ',$$

worin Me Zirkonium ist, $(C_5R'_m)$ Cyclopentadienyl oder ein substituiertes Cyclopentadienyl ist, jedes R', das gleich oder verschieden sein kann, Wasserstoff, ein Alkyl-, Alkenyl-, Aryl-, Alkylaryl- oder Arylalkylrest mit 1 bis 20 Kohlenstoffatomen ist oder zwei R'-Substituenten zusammen einen kondensierten $C_4$- bis $C_6$-Ring bilden, R'' ein $C_1$- bis $C_4$-Alkylenrest oder ein Dialkylsiliziumrest, der zwei $(C_5R'_m)$-Ringe miteinander verbindet, ist, jedes Q, das gleich oder verschieden sein kann, ein Aryl-, Alkyl-, Alkenyl-, Alkylaryl- oder Arylalkylrest mit 1 bis 20 Kohlenstoffatomen oder ein Halogenatom ist, Q' ein Alkylidenrest mit 1 bis 20 Kohlenstoffatomen ist, s 0 oder 1 ist, p 1 ist; m 4 ist, wenn s 1 ist; m 5 ist und $(C_5R'_m)$ mono-alkyl, di-alkyl-, trialkyl- oder tetra-alkyl-substituiertes Cyclopentadienyl ist; und (b) ein Alumoxan.

2. Verfahren zur Polymerisation eines oder mehrerer Olefine, bei dem man die Polymerisation in Gegenwart eines Katalysatorsystems nach Anspruch 1 durchführt.

3. Verfahren nach Anspruch 2, bei dem das Olefin Ethylen oder ein alpha-Olefin mit 3 bis 8 Kohlenstoffatomen pro Molekül ist.

**Revendications**

1. Catalyseur convenable pour la polymérisation d'une oléfine comprenant (a) un composé de formule

$$(C_5R'_m)_pR''_s(C_5R'_m)MeQ_{3-p} \text{ ou } R''_s(C_5R'_m)_2MeQ',$$

dans laquelle Me représente le zirconium, $(C_5R'_m)$ représente un radical cyclopentadiényle ou cyclopentadiényle substitué, les radicaux R', qui peuvent être identiques ou différents, représentent chacun l'hydrogène, un radical alkyle, alcényle, aryle, alkylaryle ou arylalkyle ayant 1 à 20 atomes de carbone, ou bien deux substituants R', conjointement, forment un noyau condensé en $C_4$ à $C_6$, R'' représente un radical alkylène en $C_1$ à $C_4$ ou un radical dialkylsilicium assurant le pontage de deux noyaux $(C_5R'_m)$, les radicaux Q, qui peuvent être identiques ou différents, représentent chacun un radical aryle, alkyle, alcényle, alkylaryle ou arylalkyle ayant 1 à 20 atomes de carbone ou un halogène, Q' représente un radical alkylidène ayant 1 à 20 atomes de carbone, s est égal à 0 ou 1, p est égal à 1 ; m est égal à 4 lorsque s est égal 1 ; m est égal à 5 et $(C_5R'_m)$ représente un radical cyclopentadiényle à substituant monoalkyle, dialkyle, trialkyle ou tétra-alkyle lorsque s est égal à 0 ; et (b) un alumoxane.

2. Procédé pour la polymérisation d'une ou plusieurs oléfines, qui comprend la conduite de la polymérisation en présence d'un système de catalyseur suivant la revendication 1.

3. Procédé suivant la revendication 2, dans lequel l'oléfine est l'éthylène ou une $\infty$-oléfine ayant 3 à 8 atomes de carbone par molécule.